# EUROPÄISCHE PATENTSCHRIFT

(11) **EP 1 700 052 B1**
(45) Veröffentlichungstag und Bekanntmachung des Hinweises auf die Patenterteilung: **23.01.2008**
(21) Anmeldenummer: 04802764.3
(22) Anmeldetag: 19.11.2004
(51) Int. Cl.: F16D 65/14

(54) **SELBSTVERSTÄRKENDE ELEKTROMECHANISCHE REIBUNGSBREMSE**
SELF-ENERGIZING ELECTROMECHANICAL FRICTION BRAKE
FREIN A FRICTION ELECTROMECANIQUE A AUTO-AMPLIFICATION

(30) Priorität: 24.12.2003 DE 10361265
(43) Veröffentlichungstag der Anmeldung: 13.09.2006
(73) Patentinhaber: ROBERT BOSCH GMBH, 70442 Stuttgart (DE)
(72) Erfinder: BAUMANN, Dietmar, 71282 Hemmingen (DE); HOFMANN, Dirk, 71636 Ludwigsburg (DE); VOLLERT, Herbert, 71665 Vaihingen/Enz (DE); NAGEL, Willi, 71686 Remseck/Hochdorf (DE); HENKE, Andreas, 34474 Diemelstadt (DE); FOITZIK, Bertram, 71636 Ludwigsburg (DE); GOETZELMANN, Bernd, 71696 Moeglingen (DE)
(86) Internationale Anmeldenummer: PCT/DE2004/002551
(87) Internationale Veröffentlichungsnummer: WO 2005/061920

(56) Entgegenhaltungen:
- WO-A-03/056204
- WO-A-03/106857
- DE-A- 19 819 564
- US-A1- 2004 178 027

## Beschreibung

### Stand der Technik

Die Erfindung betrifft eine selbstverstärkende elektromechanische Reibungsbremse mit den Merkmalen des Oberbegriffs des Anspruchs 1. Eine derartige Reibungsbremse ist beispielsweise bekannt aus der DE 198 19 564 A1. Diese in Form einer Scheibenbremse ausgebildete Reibungsbremse weist einen Trägerring auf, der koaxial zu einer Bremsscheibe angeordnet ist und auf seiner der Bremsscheibe zugewandten Seite Reibbremsbeläge trägt. Auf seiner von der Bremsscheibe abgewandten Seite ist der Trägerring mit Keilen bestückt deren Rampen in bzw. entgegen der Drehrichtung der Bremsscheibe ansteigen. An den Rampen stützen sich Wälzkörper ab, die wiederum in einem ortsfest angeordneten ringförmigen Bolzenträger drehbar gelagert sind. Mit Hilfe eines Elektromotors lässt sich der Trägerring relativ zum Bolzenträger verdrehen. Durch die dabei stattfindende Abwälzung der Wälzkörper auf den Rampen des Trägerrings wird dieser Trägerring gegen die Bremsscheibe bewegt und damit die Reibbremsbeläge zur Anlage an der Bremsscheibe gebracht. Die Reibbremsbeläge bewirken eine Bremskraft auf die Bremsscheibe, wobei eine Reactio dieser Bremskraft den Trägerring belastet. Diese Reactio wird durch die Rampen und die Wälzkörper in eine die
Andruckkraft verstärkende Zusatzkraft gewandelt. Damit tritt ein Selbstverstärkungseffekt ein.
Bei dieser bekannten Reibungsbremse ist jeder Rampe eines Keils genau ein Wälzkörper zugeordnet. Dessen Längsachse verläuft quer zur Verschieberichtung der Trägerplatte mit konstantem Abstand. Eine derartige Anordnung kann ein Gleiten der Wälzkörper auf den Rampen und damit eine Translationsbewegung (ein "Wandern") der Trägerplatte relativ zur Bremsscheibe nicht verhindern. Eine gegenseitige Zentrierung dieser Bauteile ist deshalb nicht unter allen Umständen gewährleistet.

Eine weitere selbstverstärkende elektromechanische Reibungsbremse ist aus der WO 03/056204 A1 bekannt. Auch diese Reibungsbremse ist als Scheibenbremse ausgebildet. Sie weist einen ...

Reibbremsbelag auf, der zum Bremsen mit einer elektromechanischen Betätigungseinrichtung an einen zu bremsenden Bremskörper drückbar ist, wobei im Falle einer Scheibenbremse der Bremskörper eine Bremsscheibe ist. Die elektromechanische Betätigungseinrichtung der bekannten Reibungsbremse weist einen Elektromotor, ein Untersetzungsgetriebe und ein Schraubgetriebe als Rotations/Translations-Umsetzungsgetriebe auf. Mit der Betätigungseinrichtung ist der Reibbremsbelag quer oder in einem Winkel schräg zur Bremsscheibe bewegbar und damit an diese drückbar. Der Aufbau der elektromechanischen Betätigungseinrichtung kann vom geschilderten Aufbau abweichen.

Zur Erzielung einer Selbstverstärkung weist die bekannte Reibungsbremse einen Rampenmechanismus mit einer in einem Winkel zur Bremsscheibe verlaufenden Rampe auf, an der sich der Reibbremsbelag beim Andrücken an die Bremsscheibe abstützt. Wird der Reibbremsbelag beim Bremsen an die drehende Bremsscheibe gedrückt, übt die Bremsscheibe eine Reibungskraft auf den Reibbremsbelag aus, die den Reibbremsbelag in Richtung eines enger werdenden, keilförmigen Spalts zwischen der den Reibbremsbelag abstützenden Rampe und der Bremsscheibe beaufschlagt. Die Abstützung des Reibbremsbelags an der schräg zur Bremsscheibe verlaufenden Rampe des Rampenmechanismus bewirkt eine Kraft auf den Reibbremsbelag mit einer Kraftkomponente quer zur Bremsscheibe. Diese Kraftkomponente quer zur Bremsscheibe ist eine Andruckkraft, die den Reibbremsbelag an die Bremsscheibe drückt. Die vom Rampenmechanismus bewirkte Andruckkraft erhöht eine von der elektromechanischen Betätigungseinrichtung bewirkte Andruckkraft und erhöht damit eine Bremskraft der Reibungsbremse. Die Erhöhung von Andruck- und Bremskraft wird als Selbstverstärkung bezeichnet.

Ein Winkel, unter dem die Rampe des Rampenmechanismus zur Bremsscheibe verläuft, kann sich im Verlauf der Rampe ändern. Ein Sonder- oder Grenzfall eines Rampenmechanismus ist ein Keilmechanismus, bei dem der Winkel, unter dem die Rampe zur Bremsscheibe verläuft, über den Verlauf der Rampe konstant ist. Die Rampe wird in diesem Fall als Keil bezeichnet. Es können mehrere Rampenmechanismen vorgesehen sein, die auf einer der Bremsscheibe abgewandten Rückseite des Reibbremsbelags verteilt angeordnet sind und die den Reibbremsbelag gemeinsam abstützen.

Bei der bekannten Reibungsbremse sind Kugeln oder Rollen als Wälzkörper vorgesehen, über die sich der Reibbremsbelag an der Rampe abstützt und die eine Reibung beim Verschieben des Reibbremsbelags entlang der Rampe mindern. Die Wälzkörper der bekannten Reibungsbremse wälzen auf Laufbahnen, die auf einer der Bremsscheibe abgewandten Rückseite des Reibbremsbelags und an einer dem Reibbremsbelag zugewandten Widerlagerplatte angebracht sind. Die Laufbahnen erstrecken sich in Verschiebrichtung des Reibbremsbelags und sind in ihrer Längsmitte am tiefsten, ihre Tiefe nimmt von der Längsmitte aus in beiden Richtungen ab. Dadurch bilden die Laufbahnen die Rampe bzw. Rampen des Rampenmechanismus. Die Laufbahnen sind vertieft in der Rückseite des Reibbremsbelags und in der Widerlagerplatte angebracht, sie führen die Wälzkörper und über die Wälzkörper den Reibbremsbelag quer zur Verschieberichtung.

Die selbstverstärkende elektromechanische Reibungsbremse ist vorstehend anhand einer Scheibenbremse beschrieben worden, weil sie sich anhand einer Scheibenbremse anschaulich erläutern lässt, weil ein überwiegender Teil bekannter derartiger Reibungsbremsen als Scheibenbremsen ausgeführt sind und weil auch die als Stand der Technik genannte Reibungsbremse eine Scheibenbremse ist. Dadurch soll die Verwirklichung der Erfindung an anderen Bremsenbautypen nicht ausgeschlossen werden.

Wird der Reibbremsbelag der bekannten Reibungsbremse zum Bremsen und Lösen der Bremse hin- und hergeschoben, wälzen die Wälzkörper ldealerweise auf den Laufbahnen ab und befinden sich in ihrer ursprünglichen Position, wenn sich auch der Reibbremsbelag wieder in seiner ursprünglichen Position befindet. Das gilt nicht, wenn bei einer selbstverstärkenden Reibungsbremse zum Verschleißausgleich der Reibbremsbelag nicht ganz zurückgestellt wird. Das nachfolgend beschriebene "Wegwandern" der Wälzkörper findet trotzdem statt. Es lässt sich nicht ausschließen, dass die Wälzkörper auf ihren Laufbahnen nicht nur wälzen, sondern auch gleiten, wenn der Reibbremsbelag hin- und hergeschoben wird. In diesem Fall gelangen die Wälzkörper nicht mehr in ihre Ausgangslage zurück. Bei vielfachem Hin- und Herschieben des Reibbremsbelags können die Wälzkörper immer weiter von ihrer Ausgangslage "wegwandern".

### Erläuterung und Vorteile der Erfindung

Bei der erfindungsgemäßen Reibungsbremse mit den Merkmalen des Anspruchs 1 sind die Wälzkörper ortsfest und drehbar gelagert. Es ist pro Wälzkörper nur eine Rampe vorhanden, auf der der Wälzkörper wälzt. Eine zugeordnete zweite Rampe, die der einen Rampe gegenüberliegend angeordnet ist und auf der der Wälzkörper ebenfalls wälzt, wobei der Wälzkörper zwischen den beiden Rampen angeordnet ist, entfällt durch die erfindungsgemäße Drehlagerung des Wälzkörpers. Allerdings sind zwei, theoretisch auch mehr, Wälzkörper pro Rampe möglich. Die Drehlagerung des Wälzkörpers hat den Vorteil, dass der Wälzkörper ortsfest gehalten ist und sich nicht aus seiner Lage wegbewegen kann. Die Lage des Wälzkörpers ist durch seine Drehlagerung dauerhaft bestimmt. Ein ungewünschtes "Wandern" des Wälzkörpers in Richtung eines Endes der Rampe durch Gleiten auf der Rampe ist ausgeschlossen. Selbst wenn der Wälzkörper auf der Rampe gleitet kann er sich nicht aus seiner durch die Drehlagerung bestimmten Lage entfernen. Weiterer Vorteil der Erfindung ist, dass pro Wälzkörper nur eine Rampe gehärtet werden muss, da pro Wälzkörper nur eine Rampe vorhanden ist. Ein zusätzlicher Vorteil ist, dass die Rampe des Rampenmechanismus bei gleichem Verschiebeweg des Reibbremsbelags ungefähr doppelt so lang ist wie zwei einander zugeordnete, einander gegenüberliegend angeordnete Rampen, auf denen beiden ein Wälzkörper wälzt. Die Anforderungen an Herstellungstoleranzen sind dadurch verringert und es lassen sich Änderungen des Rampenwinkels über die Länge der Rampe einfacher und genauer Herstellen. Mit einer Änderung des Rampenwinkels über die Länge der Rampe lässt sich die Höhe der Selbstverstärkung in Abhängigkeit vom Verschiebeweg des Reibbremsbelags und damit in Abhängigkeit von einer Betätigungs- und Bremskraft ändern. Es lässt sich beispielsweise durch einen großen Rampenwinkel am Beginn der Rampe und am Anfang der Verschiebung des Reibbremsbelags eine hohe Zustellgeschwindigkeit des Reibbremsbelags quer zur Bremsscheibe und durch einen kleinen Rampenwinkel am Ende der Rampe eine hohe Selbstverstärkung bei hoher Bremskraft erreichen.

Die Erfindung sieht bezüglich der Oberfläche des Reibbremsbelags eine Querneigung der Drehachsen der Wälzkörper und der Rampen, auf denen die Wälzkörper wälzen und an denen sich die Wälzkörper abstützen, quer zu einer Verschieberichtung des Reibbremsbelags und zu einer Umfangsrichtung des Bremskörpers vor. Die Querneigung soll so gewählt sein, dass die Wälzkörper den Reibbremsbelag zentrisch zu einer gedachten Kreisumfangslinie, die die dem Bremskörper zugewandte Oberfläche des Reibbremsbelags in zwei zumindest ungefähr gleich große Flächen teilt, abstützt. Ein Zentrum der gedachten Kreisumfangslinie liegt dabei auf der Drehachse des Bremskörpers. Radial innere und radial äußere Rampen weisen gegensinnige Querneigungen auf, wobei die Querneigungswinkel verschieden sein können. Sind mehr Wälzkörper innerhalb der gedachten Umfangslinie angeordnet als außerhalb, ist deren Querneigung und/oder ihr Abstand von der gedachten Umfangsmittellinie geringer und umgekehrt. Der Reibbremsbelag wird zentrisch zur Umfangsmittellinie abgestützt und es wird eine Führung des Reibbremsbelags quer zu seiner Verschiebberichtung, d. h. radial zu einer Bremsscheibe, bewirkt. Die Querneigungswinkel werden vorzugsweise so gewählt, dass sich zumindest näherungsweise ein Quer- oder Radialkraftausgleich ergibt.

Die Unteransprüche haben vorteilhafte Ausgestaltungen und Weiterbildungen der im Anspruch 1 angegebenen Erfindung zum Gegenstand.

Die Wälzkörper des Rampenmechanismus können drehbar und ortsfest an einem ortsfesten Widerlager des Rampenmechanismus gelagert sein (Anspruch 2). Das Widerlager ist beispielsweise fest in einem Bremssattel angeordnet, die Rampen befinden sich auf der der Bremsscheibe abgewandten Rückseite des Reibbremsbelags. Anspruch 3 sieht umgekehrt vor, dass die Wälzkörper ortsfest und drehbar am Reibbremsbelag gelagert sind, die Rampen sind in diesem Fall beispielsweise an einem Widerlager angeordnet. Bei dieser Ausgestaltung der Erfindung sind die Wälzkörper ortsfest mit dem Reibbremsbelag, d. h. sie bewegen sich mit dem Reibbremsbelag mit, wenn dieser zur Betätigung der Bremse bewegt wird. Diese Ausgestaltung der Erfindung wird gegenüber der vorhergehenden favorisiert, weil sich die Abstützung des Reibbremsbelags über die Wälzkörper an den Rampen beim Betätigen der Reibungsbremse nicht gegenüber dem Reibbremsbelag verschiebt, die Abstützung des Reibbremsbelags erfolgt also immer an denselben Stellen.

Anspruch 4 sieht vor, dass eine im Rampenwinkel verlaufende, d. h. zur Rampe rechtwinkelige gedachte Gerade durch eine Drehachse eines Wälzkörpers eine dem Bremskörper zugewandte Oberfläche des Reibbremsbelags innerhalb der Oberfläche des Reibbremsbelags schneidet. Der in Anspruch 4 definierte Schnittpunkt der gedachten Geraden mit der Oberfläche des Reibbremsbelags ist die Stelle, an der die Abstützung des Reibbremsbelags durch den Wälzkörper wirksam ist. Aufgrund des Rampenwinkels der Rampe befindet sich die Abstützstelle nicht senkrecht zum Reibbremsbelag unter dem Wälzkörper sondern abhängig vom Rampenwinkel versetzt dazu. Die Stelle, an der die Abstützung des Reibbremsbelags durch den Wälzkörper wirksam ist soll gemäß Anspruch 4 innerhalb der dem Bremskörper zugewandten Oberfläche des Reibbremsbelags befinden.

Zur Reibungs- und Verschleißminderung sieht Anspruch 5 eine Wälzlagerung auch der Wälzkörper selbst vor. Wälzlager der Wälzkörper können gemäß Anspruch 6 in Lagertaschen, d. h. in zu den Wälzlagern komplementären Vertiefungen einliegen, die auf der dem Bremskörper abgewandten Rückseite des Reibbremsbelags oder in dem ortsfesten Widerlager angebracht sind.

Anspruch 7 sieht einen Versatz der Wälzkörper in Umfangsrichtung des Bremskörpers oder in Verschieberichtung des Reibbremsbelags vor. Der Versatz soll so gewählt sein, dass die Wälzkörper den Reibbremsbelag zentrisch zu einer gedachten, radial zum Bremskörper oder quer zur Verschieberichtung des Reibbremsbelags verlaufenden Mittellinie, die die dem Bremskörper zugewandte Oberfläche des Reibbremsbelags in zwei ungefähr gleich große Flächen teilt, abstützt. Dadurch wird der Reibbremsbelag zentrisch zu seiner Verschieberichtung abgestützt, die Rampenneigung wird ausgeglichen. Diese Ausgestaltung der Erfindung entspricht der vorstehend zu Anspruch 1 diskutierten Ausgestaltung allerdings in zwei unterschiedlichen Richtungen. Während Anspruch 1 eine Querrichtung zur Verschieberichtung des Reibbremsbelags betrifft ist Anspruch 7 auf die Längs- oder Verschieberichtung gerichtet.

### Zeichnung

Die Erfindung wird nachfolgend anhand in der Zeichnung dargestellter Ausführungsbeispiele näher erläutert. Es zeigen:
- Figur 1: eine schematisierte, perspektivische Darstellung einer erfindungsgemäßen, selbstverstärkenden elektromechanischen Reibungsbremse;
- Figur 2: einen vergrößerten Ausschnitt der Reibungsbremse aus Figur 1 mit einer Pfeil II in Figur 1 entsprechenden Blickrichtung auf eine Stirnseite eines Wälzkörpers;
- Figur 3: einen Achsschnitt eines radial inneren und eines radial äußeren Wälzkörpers der Reibungsbremse aus Figur 1 entsprechend der zweifach abgewinkelten Linie III-III in Figur 1; und
- Figuren 4 bis 7: unterschiedliche Ausgestaltungsmöglichkeiten von Wälzlagerungen eines Reibbremsbelags der Reibungsbremse aus Figur 1 gemäß der Erfindung in einer in Figur 2 mit IV-IV angegebenen abgewinkelten Schnittebene.

Die Zeichnungen sind als schematisierte und vereinfachte Darstellungen zu verstehen.

### Beschreibung der Ausführungsbeispiele

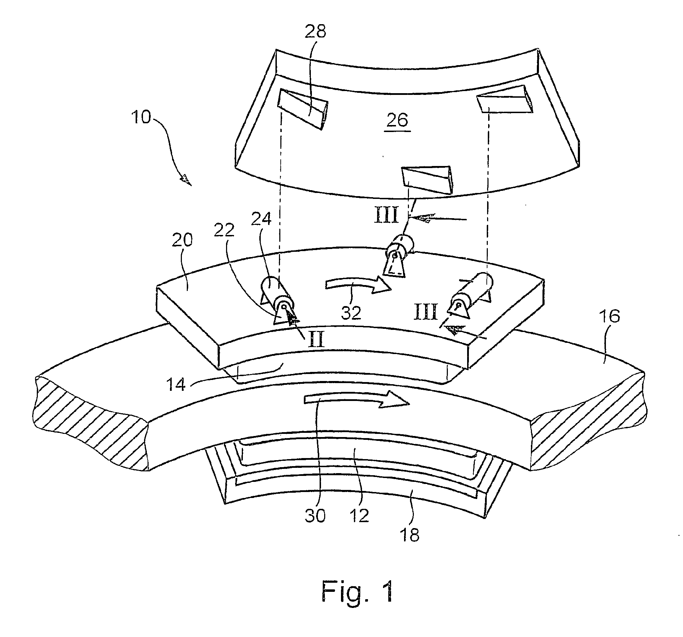

Figur 1 zeigt schematisch eine erfindungsgemäße, selbstverstärkende elektromechanische Reibungsbremse 10, die als Scheibenbremse ausgeführt ist. Die Reibungsbremse 10 weist zwei Reibbremsbeläge 12, 14 auf, die beiderseits einer Bremsscheibe 16 angeordnet sind. Einer der beiden Reibbremsbeläge 12 liegt fest, d. h. unbeweglich in einem Bremssattel 18 ein. Dieser Reibbremsbelag 12 wird nachfolgend als fester Reibbremsbelag 12 bezeichnet werden. Vom Bremssattel 18 ist nur ein in der Zeichnung unterhalb der Bremsscheibe 16 befindlicher Teil dargestellt, weil ein oberhalb der Bremsscheibe 16 befindlicher Teil des Bremssattels 18 die wesentlichen Teile der Reibungsbremse 10 verdecken würde. Der Bremssattel 18 übergreift wie üblich die Bremsscheibe 16 außerhalb ihres Umfangs.

Der andere Reibbremsbelag 14 ist in einer Drehrichtung und quer zur Bremsscheibe 16 beweglich. In Drehrichtung der Bremsscheibe 16 bedeutet, dass der bewegliche Reibbremsbelag 14 um eine gedachte Achse drehbar ist, die zumindest näherungsweise mit einer Drehachse der Bremsscheibe 16 zusammen fällt. Grundsätzlich ist auch eine Verschiebbarkeit des beweglichen Reibbremsbelags 14 in einer Sekantenrichtung zur Bremsscheibe 16 möglich. Die Bewegung des Reibbremsbelags 14 zur Betätigung der Reibungsbremse 10 erfolgt mit einer elektromechanischen Betätigungseinrichtung, die der klaren Darstellung wegen nicht gezeichnet ist. Derartige Betätigungseinrichtungen sind dem Fachmann in unterschiedlichen Konstruktionen aus dem Stand der Technik bekannt und sollen, da sie nicht den eigentlichen Gegenstand der Erfindung bilden, hier nicht näher erläutert werden.

Der Reibbremsbelag 14 ist wie üblich fest und unlösbar mit einer Bremsbelagträgerplatte 20 verbunden. Auf einer der Bremsscheibe 16 abgewandten Rückseite weist die Bremsbelagträgerplatte 20 Lagerböcke 22 auf, in denen Wälzkörper 24 drehbar gelagert sind. Im dargestellten und beschriebenen Ausführungsbeispiel der Erfindung werden Rollen als Wälzkörper 24 verwendet. Drehachsen der Wälzkörper 24 verlaufen radial zu einer Drehachse der Bremsscheibe 16. Es ist allerdings nicht zwingend, dass die Drehachsen der Wälzkörper 24 radial zur Drehachse der Bremsscheibe 16 angeordnet sind. Soll der Reibbremsbelag 14 beispielsweise in einer Sekantenrichtung zur Bremsscheibe 16 verschoben werden, verlaufen die Drehachsen der Wälzkörper 24 parallel zueinander und rechtwinklig zu der Sekante. Mit den Lagerböcken 22 sind die Wälzkörper 24 ortsfest und drehbar am beweglichen Reibbremsbelag 14 gelagert, beim Verschieben des Reibbremsbelags 14 bewegen sich die Wälzkörper 24 mit dem Reibbremsbelag 14 mit.

Auf einer der Bremsscheibe 16 zugewandten Vorderseite einer Widerlagerplatte 26 sind Rampen 28 angeordnet, an denen sich die Wälzkörper 24 abstützen und auf denen die Wälzkörper 24 wälzen. Die Rampen 28 verlaufen in einer Umfangs- und Drehrichtung der Bremsscheibe 16 und damit in der Verschieberichtung des Reibbremsbelags 14. Die Rampen 28 steigen in Drehrichtung der Bremsscheibe 16 an.

Die Widerlagerplatte 26 ist in etwa deckungsgleich mit der Bremsbelagträgerplatte 20 auf deren der Bremsscheibe 16 abgewandter Rückseite angeordnet. In Figur 1 ist die Widerlagerplatte 26 nach oben geklappt dargestellt um die Rampen 28 und die Wälzkörper 24 sichtbar zu machen. Tatsächlich ist die Widerlagerplatte 26 parallel zu den Reibbremsbelägen 12, 14, der Bremsscheibe 16 und der Bremsbelagträgerplatte 20 angeordnet. Die Widerlagerplatte 24 ist fest, d. h. unbeweglich in dem nicht dargestellten, die Bremsbelagträgerplatte 20 auf ihrer der Bremsscheibe 16 abgewandten Rückseite übergreifenden Teil des Bremssattels 18 angeordnet. Dieser nicht dargestellte Teil des Bremssattels 18 befindet sich in Figur 1 oberhalb der Bremsscheibe 16 und oberhalb der Bremsbelagträgerplatte 20. Der Bremssattel 18 ist als sog. Schwimmsattel ausgeführt, d. h. er ist quer zur Bremsscheibe 16 verschieblich. Beim Drücken des beweglichen Reibbremsbelags 14 an die Bremsscheibe 16 wird der Bremssattel 18 quer zur Bremsscheibe 16 verschoben und drückt den festen Reibbremsbelag 12 an die andere Seite der Bremsscheibe 16, so dass die Bremsscheibe 16 von beiden Reibbremsbelägen 12, 14 gebremst wird.

Zum Betätigen der Reibungsbremse 10 wird der bewegliche Reibbremsbelag 14 in Drehrichtung der Bremsscheibe 16 verschoben. Die Drehrichtung der Bremsscheibe 16 ist in Figur 1 mit dem Pfeil 30 und die Verschieberichtung des Reibbremsbelags 14 mit dem Pfeil 32 auf der Bremsbelagträgerplatte 20 dargestellt. Bei der Bewegung des Reibbremsbelags 14 in Drehrichtung 30 der Bremsscheibe 16 wälzen die Wälzkörper 24 auf den Rampen 28. Aufgrund des Anstiegs der Rampen 28 wird der Reibbremsbelag 14 bei der Bewegung in Drehrichtung 30 der Bremsscheibe 16 quer auf die Bremsscheibe 16 zu bewegt und an diese gedrückt. Die Bremsscheibe 16 wird gebremst. Die drehende Bremsscheibe 16 übt eine Reibungskraft in Drehrichtung 30 auf den an sie gedrückten Reibbremsbelag 14 aus, die den Reibbremsbelag 14 in Drehrichtung 30 der Bremsscheibe 16 und damit in seiner Bewegungsrichtung 32 beaufschlagt. Über die Abstützung an den Rampen 28 bewirkt die Beaufschlagung des Reibbremsbelags 14 mit der Reibungskraft in Drehrichtung 30 der Bremsscheibe 16 eine zu den Rampen 28 senkrechte Stützkraft, die eine Komponente quer zur Bremsscheibe 16 aufweist. Diese Kraftkomponente quer zur Bremsscheibe 16 bildet eine Andruckkraft, die den Reibbremsbelag 14 zusätzlich zu einer von der Betätigungseinrichtung aufgebrachten Andruckkraft an die Bremsscheibe 16 drückt. Die Bremskraft der Reibungsbremse 10 wird dadurch verstärkt.

Die Rampen 28 verlaufen in einem üblicherweise spitzen Rampenwinkel zur Bremsscheibe 16. Der Rampenwinkel kann sich über den Verlauf der Rampen 28, d. h. in deren Längsrichtung ändern. Bei einem über die Länge der Rampen 28 konstanten Rampenwinkel spricht man auch von Keilen. Die Rampen 28 bilden einen Rampenmechanismus, der die Selbstverstärkung der Reibungsbremse 10 bewirkt.

Im dargestellten Ausführungsbeispiel sind drei Wälzkörper 24 auf der Bremsbelagträgerplatte 20 und drei Rampen 28 auf der Widerlagerplatte 26 angeordnet. Dies ergibt eine statisch bestimmte Abstützung des Reibbremsbelags 14. Eine statisch überbestimmte Abstützung mit mehr als drei Wälzkörpern 24 und Rampen 28 ist denkbar. Auch weniger als drei Wälzkörper 24 und Rampen 28 sind möglich, wenn sich beispielsweise zwei Wälzkörper 24 und zwei Rampen 28 über eine Breite der Bremsbelagträgerplatte 20 erstrecken (nicht dargestellt.)

in dem in Figur 1 dargestellten Ausführungsbeispiel steigen die Rampen 28 nur in einer Drehrichtung 30 der Bremsscheibe 16 an, die Reibungsbremse 10 weist eine Selbstverstärkung also nur für die mit Pfeil 30 angegebene Drehrichtung der Bremsscheibe 16 auf. Bei entgegengesetzter Drehrichtung der Bremsscheibe 16 findet keine Selbstverstärkung statt. Um auch für die entgegengesetzte Drehrichtung der Bremsscheibe 16 eine Selbstverstärkung zu erzielen, können in entgegengesetzter Richtung ansteigende Rampen vorgesehen werden (nicht dargestellt). Durch unterschiedliche Rampenwinkel können verschieden große Selbstverstärkungen in den beiden Drehrichtungen der Bremsscheibe 16, also für Vor- und Rückwärtsfahrt, erreicht werden.

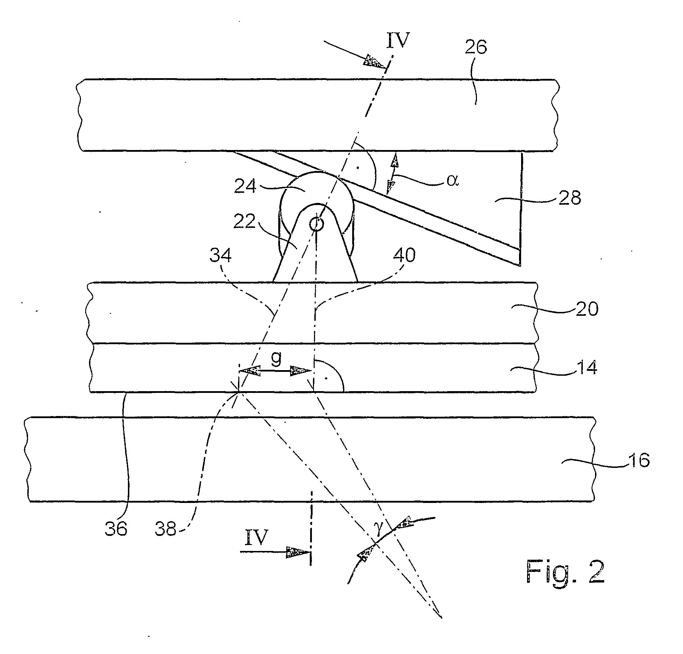

In Figur 2 ist einer der als Rolle ausgeführten Wälzkörper 24 mit axialer Blickrichtung auf den Wälzkörper 24 in vergrößerter Darstellung zu sehen. Zu sehen ist die Widerlagerplatte 26 mit der Rampe 28, auf der der Wälzkörper 24 wälzt. Die Rampe 28 ist als Keil mit konstantem Keil- oder Rampenwinkel α über eine gesamte Länge der Rampe 28 ausgeführt. Des Weiteren sind in Figur 2 zu sehen die Bremsbelagträgerplatte 20 mit dem Reibbremsbelag 14 auf ihrer der Bremsscheibe 16 zugewandten Vorderseite und dem Lagerbock 22 auf ihrer der Bremsscheibe 16 abgewandten und der Widerlagerplatte 26 zugewandten Rückseite. Der Wälzkörper 24 ist drehbar am Lagerbock 22 und damit ortsfest an der Bremsbelagträgerplatte 20 und dem Reibbremsbelag 14 gelagert.

In Figur 2 ist mit Strichpunktlinien eine Gerade 34 eingezeichnet, die radial durch eine Drehachse des Wälzkörpers 24 geht. Die Gerade 34 steht rechtwinkelig zur Rampe 28, sie geht durch die Stelle, an der sich der Wälzkörper 24 an der Rampe 28 abstützt. Die Gerade 34 schneidet eine der Bremsscheibe 16 zugewandte Oberfläche 36 des Reibbremsbelags 14 an einem mit 38 bezeichneten Schnittpunkt, der eine wirksame Abstützstelle des Reibbremsbelags 14 durch den Wälzkörper 24 angibt. Die wirksame Abstützstelle 38 befindet sich nicht senkrecht unterhalb des Wälzkörpers 24 sondern ist aufgrund der Abstützung des Wälzkörpers 24 im Rampenwinkel α an der Rampe 28 um die Strecke g in Umfangsrichtung der Bremsscheibe 16 und in Verschieberichtung des Reibbremsbelags 14 versetzt. Diese Richtung kann auch als Längsrichtung des Reibbremsbelags 14 bezeichnet werden. Die Wälzkörper 24 sind so angeordnet, dass die erläuterten Schnittpunkte 38 sich innerhalb der der Bremsscheibe 16 zugewandten Oberfläche 36 des Reibbremsbelags 14 befinden. Des Weiteren sind die Wälzkörper 24 so auf der Rückseite der Bremsbelagsträgerplatte 20 verteilt angeordnet, dass sie den Reibbremsbelag 14 zentrisch zu einer gedachten Quermittellinie, die radial zur Bremsscheibe 16 verläuft und die der Bremsscheibe 16 zugewandte Oberfläche 36 des Reibbremsbelags 14 in zwei ungefähr gleich große Flächen teilt, abstützen. Dadurch wird eine über die Fläche des Reibbremsbelags 14 in Bezug auf seine Längs- und Verschieberichtung gleichmäßig verteilte Abstützung des Reibbremsbelags 14 erreicht. Der Versatz g in Längs- oder Umfangsrichtung lässt sich auch als Versatzwinkel γ in der Ebene der der Bremsscheibe 16 zugewandten Oberfläche 36 des Reibbremsbelags 14 darstellen. Ein Scheitelpunkt des Versatzwinkels γ liegt auf der Drehachse der Bremsscheibe 16.

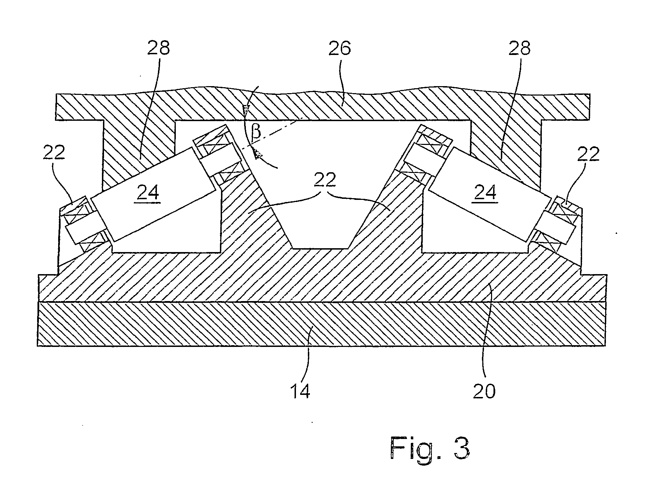

Figur 3 zeigt einen radial inneren und einen radial äußeren Wälzkörper 24. Es ist gut erkennbar, dass die Wälzkörper 24 quer zur Verschieberichtung des Reibbremsbelags 14 geneigt sind. Dabei sind die radial inneren Wälzkörper 24 einem radial äußeren Wälzkörper 24, der sich in Umfangsrichtung gesehen zwischen den radial inneren Wälzkörpern 24 befindet, einander entgegengesetzt geneigt. Die Rampen 28 weisen dieselbe Querneigung wie der jeweils zugeordnete Wälzkörper 24 auf. Querneigungswinkel β der radial inneren Wälzkörper 24 sind gleich, ein Querneigungswinkel β des radial äußeren Wälzkörpers 24 ist dagegen größer, so dass sich Querkräfte kompensieren. Die Querneigung β der Wälzkörper 24 und der Rampen 28 bewirkt eine Führung des Reibbremsbelags 14 quer zu seiner Verschieberichtung, also radial zur Bremsscheibe 16. Durch die Abstützung des Reibbremsbelags 14 mit drei Wälzkörpern 24 und drei Rampen 28, die an Ecken eines gedachten Dreiecks angeordnet sind, ergibt sich eine statisch bestimmte Abstützung und Führung des Reibbremsbelags 14 quer zu seiner Verschieberichtung und radial zur Bremsscheibe 16. Die Querneigung der Rampen 28 und der Wälzkörper 24 ist so gewählt, dass sie den Reibbremsbelag 14 zentrisch zu einer gedachten Kreisumfangslinie abstützen, deren Zentrum auf der Drehachse der Bremsscheibe 16 liegt.

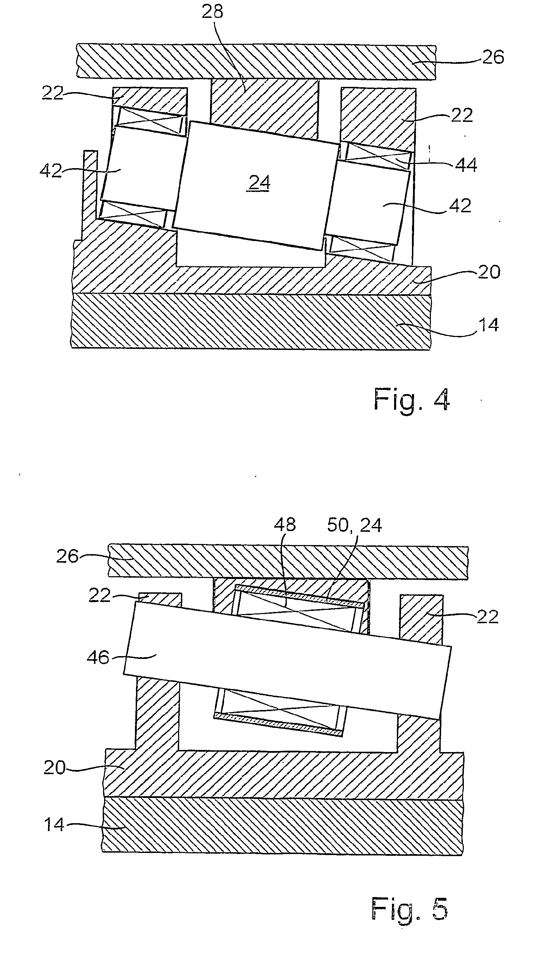

Figuren 4 bis 7 zeigen verschiedene Ausführungsbeispiele erfindungsgemäßer Wälzlagerungen der Wälzkörper 24. Dargestellt sind Axialschnitte der Wälzkörper 24 in der in Figur 2 mit IV-IV angegebenen abgewinkelten Schnittfläche. Bei dem in Figur 3 dargestellten Ausführungsbeispiel ist der Wälzkörper 24 eine zylindrische Rolle mit beidseitig axial abstehenden Achszapfen 42, die mit Nadellagern 44 in den Lagerböcken 22 der Bremsbelagträgerplatte 20 drehbar gelagert sind. Die Rampe 28, auf der der Wälzkörper 24 wälzt, ist schmaler als ein Abstand der beiden Lagerböcke 22 voneinander, die Rampe 28 greift zwischen die Lagerböcke 22.

Bei dem in Figur 5 dargestellten Ausführungsbeispiel ist beispielsweise ein Passstift als Welle 46 in die beiden Lagerböcke 22 eingepresst. Auf der Welle 46 ist mit einem Nadellager 48 eine Hülse 50 drehbar gelagert, die den Wälzkörper 24 bildet, der auf der in Figur 5 nicht sichtbaren Rampe 28 wälzt. Die Hülse 50 bildet einen Außenring des Nadellagers 28. Die in Figur 4 dargestellte Wälzlagerung des Wälzkörpers 24 hat den Vorteil, dass sie mit vergleichsweise einfach herstellbaren Teilen und mit Standardteilen auskommt. Es ist beispielsweise kein gestufter Wälzkörper 24 erforderlich.

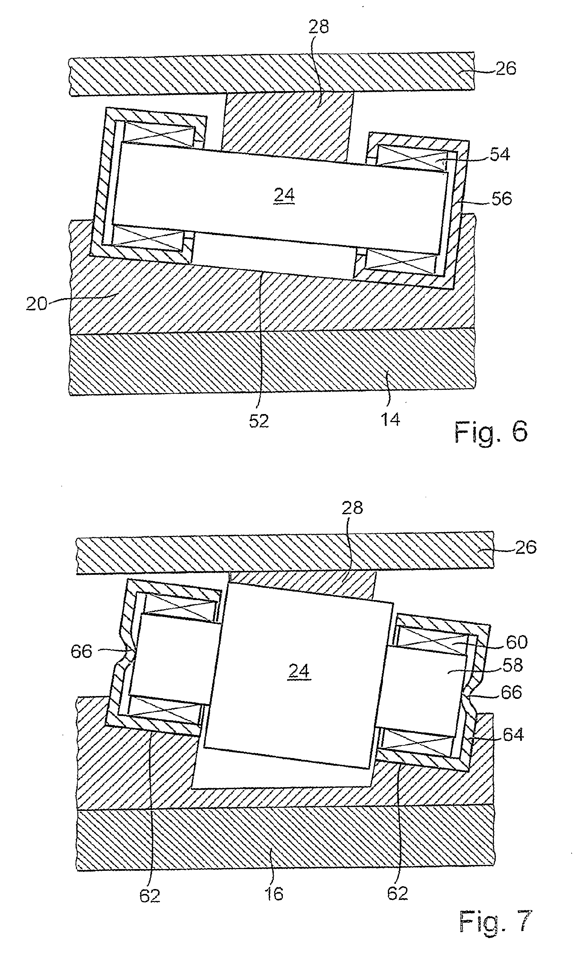

Bei der in Figur 6 dargestellten Wälzlagerung der Wälzkörper 24 ist die Rückseite der Bremsbelagsträgerplatte 20 mit Taschen 52 versehen, in denen Nadellager 54 einliegen. Die Taschen 52 sind zylinderförmige Vertiefungen in der Bremsbelagträgerplatte 20, die den gleichen Durchmesser wie Hülsen 56 der Nadellager 54 aufweisen. Die Lagerböcke 22 als solches entfallen. Der Wälzkörper 24 ist beispielsweise ein zylindrischer Stift, der in den Nadellagern 54 drehbar gelagert ist. Die Rampe 28 auf der Widerlagerplatte 26 ist schmaler als ein Abstand der Nadellager 54 voneinander und greift zwischen die Nadellager 54. Auch diese Ausgestaltung der Wälzlagerung des Wälzkörpers 24 ist preisgünstig mit einfach herstellbaren Teilen und Standardteilen fertigbar. Es sind keine Bohrungen in Lagerböcken erforderlich. Auch die Montage ist vereinfacht.

Bei der in Figur 7 dargestellten Ausgestaltung der Wälzlagerung der Wälzkörper 24 wird wieder ein durchmessergestufter, rollenförmiger Wälzkörper 24 mit seitlich abstehenden Wellenzapfen 58 verwendet, der in Nadellagern 60 drehbar gelagert ist. Die Nadellager 60 liegen wie in Figur 5 in einer Tasche 62 in der Bremsbelagträgerplatte 20 ein. Da der Wälzkörper 24 aufgrund seines im mittleren Bereich größeren Durchmessers die Nadeln der Nadellager 60 in den Lagerhülsen 64 hält, brauchen die Lagerhülsen 64 an ihrer offenen Innenseite nicht nach Innen umgebördelt sein. Bei gleicher Gesamtbaubreite wie bei der in Figur 6 dargestellten Wälzlagerung lassen sich axial längere Nadellager 60 verwenden, woraus sich eine höhere Tragzahl im Vergleich mit der in Figur 6 dargestellten Wälzlagerung ergibt. Zur axialen Führung des Wälzkörpers 24 weisen die Lagerhülsen 64 Anläufe 66 auf. Dabei handelt es sich um nach innen gerichtete Einwölbungen in einer Mitte von Stirnflächen der Lagerhülsen 64.

## Patentansprüche

1. Selbstverstärkende elektromechanische Reibungsbremse (10), mit einem Reibbremsbelag (14), der in einer Drehrichtung und in Anlage an einen Bremskörper (16) verschiebbar ist, mit einer elektromechanischen Betätigungseinrichtung, mit der der Reibbremsbelag (14) zum Bremsen an den Bremskörper (16) drückbar ist und mit einem Rampenmechanismus (24 ,28) der den Reibbremsbelag (14) unter einem Rampenwinkel (α) zum Bremskörper (16) abstützt, wobei der Rampenmechanismus (24, 28) eine Wälzkörper (24) aufweisende Wälzlagerung aufweist, mit der der Reibbremsbelag (16) im Rampenwinkel (α) zum Bremskörper (16) beweglich gelagert ist und wobei die Wälzkörper (24) ortsfest und drehbar an einem Bauteil der Reibungsbremse (10) geleagert sind,
**dadurch gekennzeichnet,**
**dass** die Drehachse der Wälzkörper (24) bezüglich der Oberfläche des Reibbremsbelags (14) eine Neigang quer zu dessen Verschieberichtung (32) aufweisen, so dass die Wälzkörper (24) den Reibbremsbelag (14) zentrisch zu einer gedachten Kreisumfangslinie mit Zentrum auf der Drehachse des Bremskörpers (16) abstützen, wobei die Kreisumfangslinie eine dem Bremskörper (16) zugewandte Oberfläche des Reibbremsbelags (14) in zwei zumindest ungefähr gleich große Flächen teilt und wobei wenigstens zwei der Wälzkörper (24) zueinander entgegengesetzt geneigt angeordnet sind.

2. Reibungsbremse nach Anspruch 1, **dadurch gekennzeichnet, dass** die Wälzkörper (24) an einem ortsfesten Widerlager (26) des Rampenmechanismus gelagert sind, wobei das Widerlager (26) den Reibbremsbelag (14) unter dem Rampenwinkel (α) zum Bremskörper (16) abstützt.

3. Reibungsbremse nach Anspruch 1, **dadurch gekennzeichnet, dass** die Wälzkörper (24) ortsfest und drehbar am Reibbremsbelag (14) gelagert sind.

4. Reibungsbremse nach Anspruch 1, **dadurch gekennzeichnet, dass** eine zu einer Rampe (28) rechtwinklige gedachte Gerade (34) durch eine Drehachse eines Wälzkörpers (24) eine dem Bremskörper (16) zugewandte Oberfläche (36) des Reibbremsbelags (14) innerhalb der Oberfläche (36) des Reibbremsbelags (14) schneidet.

5. Reibungsbremse nach Anspruch 1, **dadurch gekennzeichnet, dass** die Wälzkörper (24) wälzgelagert sind.

6. Reibungsbremse nach Anspruch 5, **dadurch gekennzeichnet, dass** die Wälzlager (54, 60) der Wälzkörper (24) in zu den Wälzlagern (54, 60) komplementären Lagertaschen (52, 62) einliegen.

7. Reibungsbremse nach Anspruch 1, **dadurch gekennzeichnet, dass** die Wälzkörper (24) in Verschieberichtung des Reibbremsbelags (14) so versetzt angeordnet sind, dass sie den Reibbremsbelag (14) zentrisch zu einer gedachten, quer zur Verschieberichtung des Reibbremsbelags (14) verlaufenden Mittellinie, die die dem Bremskörper (16) zugewandte Oberfläche (36) des Reibbremsbelags (14) in zwei zumindest ungefähr gleich große Flächen teilt, abstützen.

8. Reibungsbremse nach Anspruch 1, **dadurch gekennzeichnet, dass** die Reibungsbremse (10) eine Teilbelagscheibenbremse ist.

## Claims

1. Self-energizing electromechanical friction brake (10), having a friction brake lining (14) which can be moved in a rotational direction and into abutment against a brake body (16), having an electromechanical activation device with which the friction brake lining (14) can be pressed, for the purpose of braking, against the brake body (16), and having a ramp mechanism (24, 28) which supports the friction brake lining (14) at a ramp angle (α) with respect to the brake body (16), wherein the ramp mechanism (24, 28) has a roller bearing having rolling bodies (24), with which roller bearing the friction brake lining (14) is mounted so as to be movable at the ramp angle (α) with respect to the brake body (16), and wherein the rolling bodies (24) are mounted fixedly and rotatably on a component of the friction brake (10), **characterized in that** the rotational axes of the rolling bodies (24) have, with respect to the surface of the friction brake lining (14), an inclination in the transverse direction with respect to its displacement direction (32) so that the rolling bodies (24) support the friction brake lining (14) centrally with respect to a virtual circumferential line with its centre on the rotational axis of the brake body (16), wherein the circumferential line divides a surface, facing the brake body (16), of the friction brake lining (14) into two faces which are at least approximately equal in size, and wherein at least two of the rolling bodies (24) are arranged inclined in opposite directions with respect to one another.

2. Friction brake according to Claim 1, **characterized in that** the rolling bodies (24) are mounted on a fixed counter bearing (26) of the ramp mechanism, wherein the counter bearing (26) supports the friction brake lining (14) at the ramp angle (α) with respect to the brake body (16).

3. Friction brake according to Claim 1, **characterized in that** the rolling bodies (24) are mounted fixedly and rotatably on the friction brake lining (14).

4. Friction brake according to Claim 1, **characterized in that** a virtual straight line (34) which is at right angles to a ramp (28) intersects, through a rotational axis of a rolling body (24), a surface (36), facing the brake body (16), of the friction brake lining (14) within the surface (36) of the friction brake lining (14).

5. Friction brake according to Claim 1, **characterized in that** the rolling bodies (24) have rolling bearings.

6. Friction brake according to Claim 5, **characterized in that** the rolling bearings (54, 60) of the rolling bodies (24) fit into bearing pockets (52, 62) which are complementary to the rolling bearings (54, 60).

7. Friction brake according to Claim 1, **characterized in that** the rolling bodies (24) are arranged offset in the displacement direction of the friction brake lining (14) in such a way that they support the friction brake lining (14) centrally with respect to an imaginary centre line which extends transversely with respect to the displacement direction of the friction brake lining (14) and which divides the surface (36), facing the brake body (16), of the friction brake lining (14) into two faces which are at least approximately equal in size.

8. Friction brake according to Claim 1, **characterized in that** the friction brake (10) is a partially lined disc brake.

## Revendications

1. Frein à friction (10) électromécanique, auto-amplifié, comportant une garniture de friction (14) qui peut coulisser dans un sens de rotation en appui contre un corps de frein (16), une installation d'actionnement électromécanique poussant la garniture de friction (14) contre le corps de frein (16) pour freiner et un mécanisme à rampe (24, 28) soutient la garniture de friction (14) suivant un angle de rampe (α) par rapport au corps de frein (16),
le mécanisme à rampe (24, 28) comportant un palier de roulement avec des organes de roulement (24) qui assurent le montage mobile de la garniture de friction (14) suivant l'angle de rampe (α) par rapport au corps de frein (16), et
les organes de roulement (24) sont montés de manière fixe, à rotation, sur une pièce du frein à friction (10),
**caractérisé en ce que**
les axes de rotation des organes de roulement (24) ont une inclinaison transversale par rapport à la surface supérieure de la garniture de friction (14) par rapport à sa direction de coulissement (32) de façon que les organes de roulement (24) soutiennent la garniture de friction (14) de manière centrée par rapport à une ligne circulaire géométrique dont le centre correspond à l'axe de rotation du corps de frein (16), et
la ligne circulaire divise la surface de la garniture de friction (14) tournée vers le corps de frein (16) en deux surfaces au moins sensiblement de mêmes dimensions et au moins deux des organes de roulement (24) sont inclinés l'un par rapport à l'autre.

2. Frein à friction selon la revendication 1,
**caractérisé en ce que**
les organes de roulement (24) sont contre un contre-appui fixe (26) du mécanisme à rampe, le contre-appui (26) poussant la garniture de friction (14) vers le corps de frein (16) suivant l'angle de rampe (α).

3. Frein à friction selon la revendication 1,
**caractérisé en ce que**
les organes de roulement (24) sont montés de manière fixe, à rotation, sur la garniture de friction (14).

4. Frein à friction selon la revendication 1,
**caractérisé par**
une droite géométrique (34) perpendiculaire à la rampe (28) passant par l'axe de rotation d'un organe de roulement (24) et coupant la surface supérieure (36) de la garniture de friction (14) tournée vers le corps de frein (16), dans la surface supérieure (36) de la garniture de friction (14).

5. Frein à friction selon la revendication 1,
**caractérisé en ce que**
les organes de roulement (24) ont des paliers à roulement.

6. Frein à friction selon la revendication 5,
**caractérisé en ce que**
les paliers à roulement (54, 60) des organes de roulement (24) sont placés dans des cavités de palier (52, 62) complémentaires au palier de roulement (54, 60).

7. Frein à friction selon la revendication 1,
**caractérisé en ce que**
les organes de roulement (24) sont décalés dans la direction de coulissement de la garniture de friction (14) pour soutenir la garniture de friction (14) de manière centrée par rapport à une ligne centrale géométrique, transversale à la direction de coulissement de la garniture de friction (14), qui divise la surface supérieure (36) de la garniture de fiction (14) tournée vers le corps de frein (16) en deux surfaces au moins sensiblement de mêmes dimensions.

8. Frein à friction selon la revendication 1,
**caractérisé en ce que**
le frein à friction (10) est un frein à disque à garniture fractionnée.
